# EUROPEAN PATENT APPLICATION

(11) **EP 4 458 613 A1**
(43) Date of publication of application: **06.11.2024**
(21) Application number: 22915659.1
(22) Date of filing: 06.12.2022
(51) Int. Cl.: B60Q 1/115, B60Q 1/14

(54) **LIGHT DISTRIBUTION CONTROL DEVICE AND LIGHT DISTRIBUTION CONTROL METHOD**

(30) Priority: 27.12.2021 JP 2021213024
(71) Applicant: KOITO MANUFACTURING CO., LTD., Minato-ku Tokyo 108-8711 (JP)
(72) Inventor: KATAOKA, Takuya, Shizuoka-shi Shizuoka 424-8764 (JP); SUMITANI, Hiroki, Shizuoka-shi Shizuoka 424-8764 (JP)
(74) Representative: Algemeen Octrooi- en Merkenbureau B.V.
(86) International application number: PCT/JP2022/044933
(87) International publication number: WO 2023/127428

(57) **Abstract**

A light distribution controlling device (8) controls a low beam lamp (44) capable of forming a low beam light distribution pattern (PL) having a cutoff line (CL). The light distribution controlling device (8) controls the low beam lamp (44) so as to keep a region above a reference formation region for the low beam light distribution pattern (PL) from being illuminated with light, in accordance with a change in an angle of tilt of a vehicle's right-left axis of a vehicle (100) provided with the low beam lamp (44).

## Description

### TECHNICAL FIELD

The present invention relates to light distribution controlling devices and light distribution controlling methods.

### BACKGROUND ART

Vehicle lamps play an important role in safe driving at night or inside tunnels. If, with the priority on the visibility of the driver, vehicle lamps brightly illuminate broadly ahead of the vehicle, this creates a problem of causing glare on the drivers of front vehicles, including leading vehicles and oncoming vehicles. In this respect, conventional vehicle lamps reduce glare caused on, for example, the drivers of front vehicles by forming a low beam light distribution pattern that includes a cutoff line (see, for example, Patent Literature 1).

Meanwhile, adaptive driving beam (ADB) control has been proposed that dynamically and adaptively controls a high beam light distribution pattern based on the conditions surrounding the vehicle. ADB control detects the presence of a front vehicle using, for example, a camera and dims or turns off the light illuminating the region corresponding to the front vehicle. Varying the high beam light distribution in accordance with the position of the front vehicle can reduce glare caused, for example, on the driver of the front vehicle and also improve the visibility of the driver of the host vehicle.

### RELATED-ART LITERATURE

### PATENT LITERATURE

Patent Literature 1: JP 2012-134091

### SUMMARY OF INVENTION

### TECHNICAL PROBLEM

Having diligently examined light distribution control of vehicle lamps, the present inventors have come to recognize that glare can be caused on the driver of a front vehicle when the host vehicle becomes tilted.

The present invention has been made in view of such circumstances and is directed, in one aspect, to providing a technology for reducing glare caused on the driver of a front vehicle.

### SOLUTION TO PROBLEM

To solve the problem above, one aspect of the present invention provides a light distribution controlling device that controls a low beam lamp capable of forming a low beam light distribution pattern having a cutoff line. The light distribution controlling device controls the low beam lamp so as to keep a region above a reference formation region set in advance for the low beam light distribution pattern from being illuminated with light, in accordance with a change in an angle of tilt of a vehicle's right-left axis of a vehicle provided with the low beam lamp.

Another aspect of the present invention provides a light distribution controlling method of controlling a low beam lamp capable of forming a low beam light distribution pattern having a cutoff line. The light distribution controlling method includes controlling the low beam lamp so as to keep a region above a reference formation region set in advance for the low beam light distribution pattern from being illuminated with light, in accordance with a change in an angle of tilt of a vehicle's right-left axis of a vehicle provided with the low beam lamp.

It is to be noted that any combinations of the constituent elements above or an embodiment obtained by converting what is expressed by the present invention between a method, an apparatus, a system, and so forth is also valid as an aspect of the present invention.

### ADVANTAGEOUS EFFECTS OF INVENTION

The present invention can reduce glare caused on the driver of a front vehicle.

### BRIEF DESCRIPTION OF DRAWINGS

[Fig. 1] Fig. 1 shows a schematic configuration of a vehicle lamp system according to Embodiment 1.
[Fig. 2] Fig. 2 is a schematic diagram of light distribution patterns that a low beam lamp and a light distribution variable lamp form.
[Fig. 3] Fig. 3(A) shows a state in which a host vehicle that has formed a low beam light distribution pattern and an ADB light distribution pattern in their reference formation regions has become tilted sideways. Fig. 3(B) is an illustration for describing light distribution control performed when a host vehicle has become tilted sideways.
[Fig. 4] Fig. 4 is a flowchart for describing one example of control that a light distribution controlling device executes.
[Fig. 5] Fig. 5 shows a schematic configuration of a vehicle lamp system according to Embodiment 2.
[Fig. 6] Fig. 6(A) shows a range that a low beam lamp and a light distribution variable lamp can illuminate with light. Fig. 6(B) is a schematic diagram of light distribution patterns that a low beam lamp and a light distribution variable lamp form.
[Fig. 7] Figs. 7(A) and 7(B) are illustrations for describing light distribution control performed when a host vehicle has become tilted sideways.

### DESCRIPTION OF EMBODIMENTS

Hereinafter, the present invention will be described based on some exemplary embodiments with reference to the drawings. The embodiments are illustrative in nature and are not intended to limit the invention. Not all the features and combinations thereof described of the embodiments are necessarily essential to the invention. Identical or equivalent constituent elements, members, and processes illustrated in the drawings are given identical reference characters, and their duplicate description will be omitted as appropriate. The scales and shapes of the components illustrated in the drawings are set merely for convenience in order to facilitate the description and are not to be interpreted as limiting, unless specifically indicated otherwise. When terms such as "first" and "second" are used in the present specification or in the claims, these terms do not indicate the order or the levels of importance in any way and are merely used to distinguish a given component from another component, unless specifically indicated otherwise. Those parts of a member that are not important in describing the embodiments are omitted from the drawings.

### (Embodiment 1)

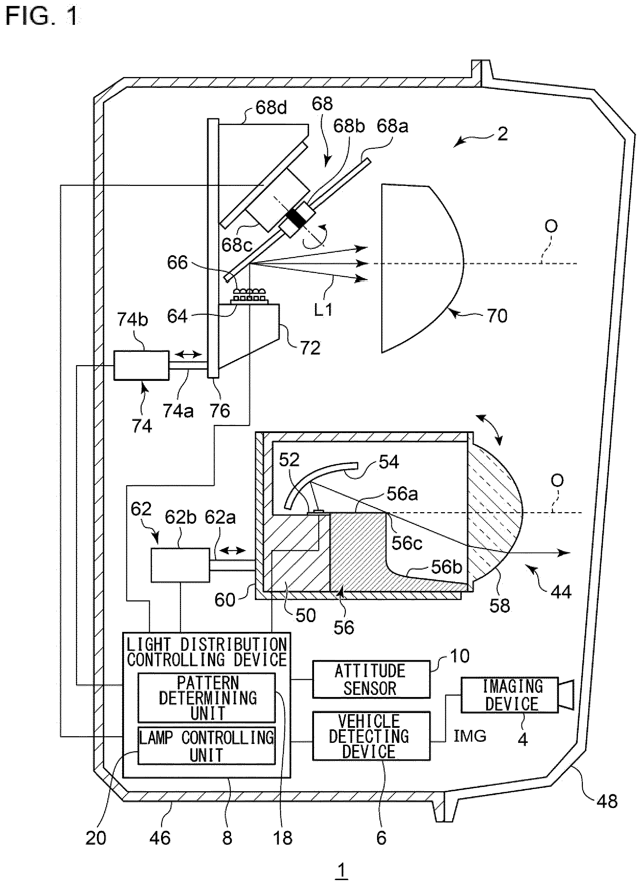

Fig. 1 shows a schematic configuration of a vehicle lamp system 1 according to Embodiment 1. Fig. 1 depicts some of the constituent elements of the vehicle lamp system 1 in the form of functional blocks. These functional blocks are implemented, in terms of their hardware configuration, by elements and/or circuits, such as a CPU or memory of a computer, or implemented, in terms of their software configuration, by a computer program or the like. It is to be appreciated by a person skilled in the art that these functional blocks can be implemented in a variety of forms through combinations of hardware and software.

The vehicle lamp system 1 includes a low beam lamp 44, a light distribution variable lamp 2, an imaging device 4, a vehicle detecting device 6, a light distribution controlling device 8, and an attitude sensor 10. These components are provided in a vehicle. According to the present embodiment, the vehicle in which the vehicle lamp system 1 is provided is a straddle-type vehicle, such as a motorcycle. The low beam lamp 44, the light distribution variable lamp 2, the imaging device 4, the vehicle detecting device 6, the light distribution controlling device 8, and the attitude sensor 10 may all be contained within a single housing, or some of these members may be provided outside such a housing.

For example, the low beam lamp 44, the light distribution variable lamp 2, the imaging device 4, the vehicle detecting device 6, the light distribution controlling device 8, and the attitude sensor 10 are housed in a lamp room. The lamp room is defined by a lamp body 46 having an opening that opens to the front side of the vehicle and a light-transmissive cover 48 attached so as to cover the opening of the lamp body 46. The imaging device 4, the vehicle detecting device 6, the light distribution controlling device 8, and the attitude sensor 10 may be provided outside the lamp room, such as in the vehicle. In this case, the imaging device 4 may be an onboard camera. The vehicle detecting device 6 and the light distribution controlling device 8 may be, for example, entirely or partly constituted by a vehicle ECU. The low beam lamp 44 and the light distribution variable lamp 2 may be housed in separate lamp rooms.

The low beam lamp 44 is fixed to the lamp body 46 by a known coupling mechanism (not shown) in such a manner that an optical axis O can be adjusted in the horizontal direction and in the vertical direction. The low beam lamp 44 includes a light source mounting portion 50, a light source 52, a reflector 54, a shade member 56, and a projection lens 58.

The light source mounting portion 50 is formed, for example, of a metal material, such as aluminum, and the light source 52 is mounted on the light source mounting portion 50. The light source 52 is, for example, a light emitting diode (LED). Herein, the light source 52 may instead be, for example, a semiconductor light source other than an LED, such as a laser diode (LD) or an organic or inorganic electroluminescence (EL) element, an incandescent lamp, a halogen lamp, or a discharge lamp. The light source 52 emits light toward the reflector 54. The reflector 54 has a substantially dome-like shape. The reflector 54 is disposed so as to cover the light source 52 and is fixed to the light source mounting portion 50. The reflector 54 has a reflective surface formed by a part of a spheroidal surface. The reflective surface has a first focal point and a second focal point located further toward the front side of the lamp than the first focal point. The position of the reflector 54 relative to the light source 52 is set in such a manner that the position of the light source 52 substantially coincides with the first focal point of the reflective surface.

The shade member 56 is fixed to the side of the light source mounting portion 50 that faces toward the front of the vehicle. The shade member 56 includes a flat portion 56a disposed substantially horizontally and a curved portion 56b located to the side of the flat portion 56a that faces toward the front of the vehicle. The curved portion 56b is curved downward so as not to block the light source light entering the projection lens 58. The position of the reflector 54 relative to the shade member 56 is set in such a manner that a ridge 56c formed by the flat portion 56a and the curved portion 56b is located on or around the second focal point of the reflective surface. The projection lens 58 is fixed at the leading end of the curved portion 56b. The projection lens 58 is formed, for example, by a plano-convex aspherical lens and projects an inverted image of a light source image formed in a posterior focal plane onto an imaginary vertical screen ahead of the vehicle. The projection lens 58 is disposed in the optical axis O of the low beam lamp 44 in such a manner that the posterior focal point of the projection lens 58 substantially coincides with the second focal point of the reflective surface.

Light emitted from the light source 52 is reflected by the reflector 54, travels through the vicinity of the ridge 56c, and enters the projection lens 58. The light that has entered the projection lens 58 is projected as substantially parallel light into the region ahead of the vehicle. At this point, the shade member 56 blocks part of the light emitted by the light source 52 from traveling to the region ahead of the vehicle. Specifically, part of the light emitted from the light source 52 is reflected by the flat portion 56a. In other words, the light from the light source 52 is selectively cut off at the ridge 56c serving as a boundary. Accordingly, a low beam light distribution pattern having a cutoff line corresponding to the shape of the ridge 56c is formed in the region ahead of the vehicle. Herein, a light distribution pattern is understood as a two-dimensional illuminance distribution of an illumination pattern that a lamp forms on an imaginary vertical screen ahead of the vehicle.

Herein, the structure of the low beam lamp 44 is not limited to the one described above. For example, the shade member 56 that forms a cutoff line may be of a shutter type in which a shade plate moves back and forth along the optical axis O. The low beam lamp 44 does not have to include the reflector 54 or the projection lens 58.

The low beam lamp 44 is supported by the lamp body 46 with a bracket 60 therebetween. A driving mechanism 62 that levels the optical axis O of the low beam lamp 44 is coupled to the bracket 60. The driving mechanism 62 is constituted, for example, by a leveling actuator, and the driving mechanism 62 includes, for example, a rod 62a and a motor 62b that causes the rod 62a to extend or contract in the front-back direction of the vehicle. In the present embodiment, the rod 62a is coupled to the bracket 60. The driving mechanism 62 causes the rod 62a to extend or contract in the front-back direction of the vehicle by the driving of the motor 62b. This configuration makes it possible to level the optical axis O of the low beam lamp 44 mounted on the bracket 60 in the up-down direction (pitch direction) of the vehicle. The light source 52 and the driving mechanism 62 are controlled by the light distribution controlling device 8.

The light distribution variable lamp 2 is fixed to the lamp body 46 by a known coupling mechanism (not shown) in such a manner that an optical axis O can be adjusted in the horizontal direction and in the vertical direction. The light distribution variable lamp 2 is capable of illuminating a region ahead of the host vehicle with a visible light beam L1 of a variable intensity distribution. The light distribution variable lamp 2 is enabled to vary the illuminance of light in a plurality of illuminated individual regions arrayed ahead of the vehicle independently of each other. The plurality of individual regions are arrayed, for example, in a single row by multiple column pattern (one individual region in the up-down direction and a plurality of individual regions in the right-left direction). Alternatively, the plurality of individual regions are arrayed, for example, in a matrix (a plurality of individual regions in the up-down direction and a plurality of individual regions in the right-left direction). The light distribution variable lamp 2 receives information instructing on a light distribution pattern from the light distribution controlling device 8 and emits a visible light beam L1 having an intensity distribution corresponding to the light distribution pattern. Thus, an ADB light distribution pattern is formed ahead of the host vehicle.

The light distribution variable lamp 2 according to the present embodiment is a lamp unit of a so-called scan optic type and includes a light source 64, a condenser lens 66, a rotary reflector 68, a projection lens 70, a heat sink 72, and a driving mechanism 74.

The light source 64 has a structure in which a plurality of light emitting elements are arrayed on a circuit board. The light emitting elements are configured to be capable of being turned on or off independently of each other. For the light emitting elements, semiconductor light emitting elements, such as LEDs, LDs, or organic or inorganic EL elements, can be used. Herein, the light source 64 may be constituted, for example, by an incandescent lamp, a halogen lamp, or a discharge lamp. The condenser lens 66 deflects the optical path of the light emitted from the light source 64 toward a blade 68a of the rotary reflector 68.

The rotary reflector 68 rotates about the axis of rotation while reflecting the light emitted from the light source 64. The rotary reflector 68 includes a plurality of blades 68a, a rotary cylinder 68b, and a motor 68c that serves as a driving source. The plurality of blades 68a function as a reflective surface that reflects the light and are fixed to the peripheral surface of the rotary cylinder 68b. The attitude of the rotary cylinder 68b is set in such a manner that the center axis of the cylinder coincides with the output shaft of the motor 68c, and the rotary cylinder 68b is fixed to the output shaft of the motor 68c. Upon the motor 68c being driven, the blades 68a turn in one direction about the axis of rotation. The blades 68a reflect the light from the light source 64 while turning and thus scan the region ahead of the vehicle with the light. The projection lens 70 projects the light reflected by the rotary reflector 68 into the region ahead of the vehicle. The projection lens 70 is constituted, for example, by a plano-convex aspherical lens. The heat sink 72 diffuses the heat from the light source 64. The light source 64 is fixed to the surface of the heat sink 72 that faces toward the rotary reflector 68.

The light distribution variable lamp 2 is supported by the lamp body 46 with a bracket 76 therebetween. Specifically, the heat sink 72 is fixed to the surface of the bracket 76 that faces toward the front of the vehicle. The light source 64 is fixed to the bracket 76 with the heat sink 72 therebetween. The rotary reflector 68 is fixed to the bracket 76 with a pedestal 68d therebetween. The projection lens 70 is fixed to the bracket 76 with a lens holder (not shown) therebetween.

The driving mechanism 74 is coupled to the surface of the bracket 76 that faces toward the back of the vehicle. The driving mechanism 74 is constituted, for example, by a leveling actuator, and the driving mechanism 74 includes, for example, a rod 74a and a motor 74b that causes the rod 74a to extend or contract in the front-back direction of the vehicle. In the present embodiment, the rod 74a is coupled to the bracket 76. The driving mechanism 74 causes the rod 74a to extend or contract in the front-back direction of the vehicle by the driving of the motor 74b. This configuration makes it possible to level the optical axis 0 of the light distribution variable lamp 2 mounted on the bracket 76 in the up-down direction of the vehicle. The light source 64, the rotary reflector 68, and the driving mechanism 74 are controlled by the light distribution controlling device 8.

Herein, the structure of the light distribution variable lamp 2 is not limited to the one described above. For example, the light distribution variable lamp 2 may be constituted, for example, by a plurality of light sources arrayed in a matrix and a lighting circuit that drives the light sources to turn them on independently of each other. In this case, the individual regions are mapped to the respective light sources, and each individual region is illuminated individually with the light from the corresponding light source. Furthermore, the light distribution variable lamp 2 may be constituted by a pattern forming device of a matrix type, such as a digital micromirror device (DMD) or a liquid crystal device. In an alternative configuration, illumination of light directed toward the region ahead of the vehicle may be partly blocked by a shade plate. The light distribution variable lamp 2 may be integrated with the low beam lamp 44.

The imaging device 4 has a sensitivity in a visible light range and repeatedly captures an image of the region ahead of the host vehicle. An image IMG generated by the imaging device 4 is sent to the vehicle detecting device 6. An image IMG that the vehicle detecting device 6 acquires from the imaging device 4 may be RAW image data or image data subjected to predetermined image processing by the imaging device 4. When the vehicle detecting device 6 receives image data resulting from subjecting RAW image data generated by the imaging device 4 to image processing performed by a processing device other than the imaging device 4, this receiving also corresponds to the acquiring of an image IMG from the imaging device 4. In the following description, "an image IMG that is based on the imaging device 4" may mean either of RAW image data and data subjected to image processing. Furthermore, the expression "image IMG" may be used without any distinction between the two types of image data.

The vehicle detecting device 6 detects a front vehicle, including a leading vehicle and an oncoming vehicle, with the use of an image IMG that is based on the imaging device 4. For example, the vehicle detecting device 6 performs known image processing, such as binarization, on an image IMG and thus extracts a luminous point derived from a lamp of a front vehicle. The lamp of the front vehicle is a rear lamp or the like if the front vehicle is a leading vehicle or is a headlamp or the like if the front vehicle is an oncoming vehicle. A rear lamp includes a stop lamp and a tail lamp. Then, based on the extracted luminous point, the vehicle detecting device 6 detects the presence and the position of the front vehicle. The vehicle detecting device 6 sends its detection result to the light distribution controlling device 8. Herein, the vehicle detecting device 6 may detect a front vehicle without extracting a luminous point but with the use of a known method, including algorithm recognition or deep learning. The vehicle detecting device 6 may also detect a target other than a front vehicle.

The attitude sensor 10 measures the tilt of the host vehicle in the right-left direction. That is, the attitude sensor 10 measures the angle of tilt of the vehicle's right-left axis with respect to a horizontal line or a vertical line (i.e., the angle of tilt of the vehicle's up-down axis with respect to a horizontal line or a vertical line). The attitude sensor 10 is constituted, for example, by a known inertial measurement unit (IMU). The attitude sensor 10 sends its measurement result to the light distribution controlling device 8.

Based on the detection result of the vehicle detecting device 6 and the measurement result of the attitude sensor 10, the light distribution controlling device 8 controls formation of light distribution patterns by the low beam lamp 44 and the light distribution variable lamp 2. The vehicle detecting device 6 and the light distribution controlling device 8 can be constituted by a digital processor, and for example, the vehicle detecting device 6 and the light distribution controlling device 8 may be constituted by a combination of a microcomputer including a CPU and a software program or by a field programmable gate array (FPGA), an application specific IC (ASIC), or the like.

The light distribution controlling device 8 includes, in one example, a pattern determining unit 18 and a lamp controlling unit 20. Each of these units operates as an integrated circuit constituting itself executes a program stored in a memory. The detection result of the vehicle detecting device 6 and the measurement result of the attitude sensor 10 are acquired by the pattern determining unit 18. Based on these pieces of information, the pattern determining unit 18 determines the light distribution patterns to be formed by the low beam lamp 44 and the light distribution variable lamp 2. The pattern determining unit 18 sends information about the determined light distribution patterns to the lamp controlling unit 20. The lamp controlling unit 20 instructs the low beam lamp 44 and the light distribution variable lamp 2 to form the light distribution patterns. Thus, the light distribution patterns are formed ahead of the host vehicle by the low beam lamp 44 and the light distribution variable lamp 2.

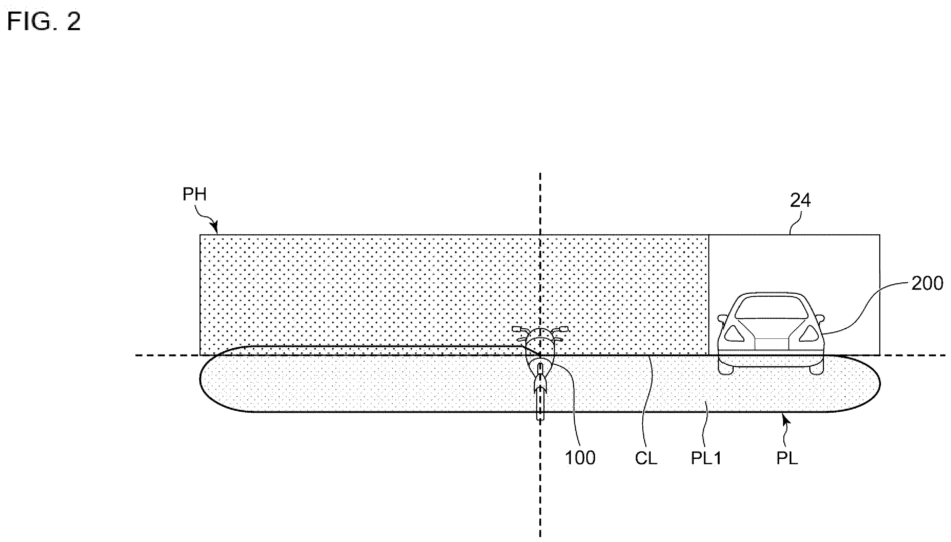

Fig. 2 is a schematic diagram of light distribution patterns that the low beam lamp 44 and the light distribution variable lamp 2 form. Fig. 2 shows a low beam light distribution pattern PL and an ADB light distribution pattern PH formed when the angle of tilt of the vehicle's right-left axis of a host vehicle 100 with respect to a horizontal line is smaller than a predetermined threshold. In the following, a region in which a light distribution pattern is formed when the angle of tilt of the vehicle's right-left axis is smaller than a predetermined threshold (the angle of the optical axis O is assumed to be a predefined angle, such as an initial aiming angle) is referred to as a reference formation region for the corresponding light distribution pattern. A reference formation region is set in advance and its information is held in the light distribution controlling device 8. The angle of tilt that is smaller than a predetermined threshold is, in one example, an angle held when the host vehicle 100 is substantially not tilted, that is, an angle within a range including 0 degrees.

The low beam lamp 44 can form a low beam light distribution pattern PL by projecting light from the light source 52. A low beam light distribution pattern PL in its reference formation region includes a diffusion pattern PL1 that spreads in the right-left direction below a horizontal line (H line) and a cutoff line CL located above the diffusion pattern PL1. The cutoff line CL has a known shape and constitutes the outline on the upper side of the low beam light distribution pattern PL. In one example, the cutoff line CL includes a first part that extends in the horizontal direction in the oncoming lane, a second part that extends in the horizontal direction in the host vehicle's lane at a position higher than the first part, and a third part that extends diagonally between the first part and the second part to connect the first part and the second part.

The cutoff line CL is set to be located lower than the driver (in particular, the driver's face) of the front vehicle 200 when the low beam light distribution pattern PL is formed in its reference formation region. For example, the first part overlaps the horizontal line when the low beam light distribution pattern PL is in its reference formation region. This configuration makes it possible to reduce glare that the low beam light distribution pattern PL causes on the driver of a front vehicle 200.

The light distribution variable lamp 2 can form an ADB light distribution pattern PH in the region above the cutoff line CL through a combination of turning on/off the light source 64, rotating the rotary reflector 68, and driving the driving mechanism 74. In one example, the ADB light distribution pattern PH is formed in the region in which a known high beam light distribution pattern is to be formed. When a front vehicle 200 is detected by the vehicle detecting device 6, an ADB light distribution pattern PH that includes a shaded region 24 to overlap the front vehicle 200 is set. The shaded region 24 is a portion where the luminance (illuminance) is zero or where the luminance has been reduced to higher than zero but lower than the luminance held prior to shading. This configuration makes it possible to execute ADB control of dynamically and adaptively controlling the light distribution of the light distribution variable lamp 2 in accordance with a target present in the region ahead.

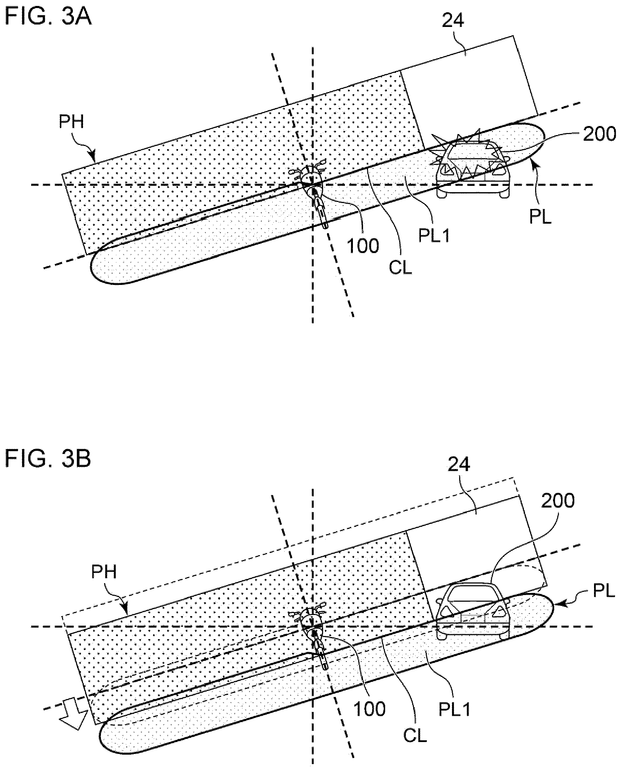

Next, light distribution control performed when the host vehicle 100 has become tilted sideways will be described. Fig. 3(A) shows a state in which the host vehicle 100 that has formed a low beam light distribution pattern PL and an ADB light distribution pattern PH in their reference formation regions has become tilted sideways. When the host vehicle 100 becomes tilted sideways as shown in Fig. 3(A), the low beam lamp 44 and the light distribution variable lamp 2 provided in the host vehicle 100 also become tilted sideways. In particular, if the host vehicle 100 is a straddle-type vehicle, the host vehicle 100 banks right and left to a great extent when, for example, traveling on a curved road. Therefore, the lamps tend to tilt to a great extent as well.

The light distribution patterns formed when the lamps are tilted are tilted with respect to the ground surface. The ADB light distribution pattern PH avoids illuminating the driver of the front vehicle 200 by the shaded region 24. Therefore, even when the ADB light distribution pattern PH becomes tilted, the likelihood that the driver of the front vehicle 200 is illuminated with the ADB light distribution pattern PH is low.

In contrast, the low beam light distribution pattern PL avoids illuminating the driver of the front vehicle 200 as, with its shape retained constant, its formation region is limited to the area below the driver of the front vehicle 200. Therefore, when the low beam light distribution pattern PL becomes tilted, part of the low beam light distribution pattern PL is displaced into the region above the reference formation region, that is, into the region that is not supposed to be illuminated with the low beam light distribution pattern PL, and the driver of the front vehicle 200 may be illuminated with the low beam light distribution pattern PL. In the state shown in Fig. 3(A), the first part of the cutoff line CL has been displaced into the area above the horizontal line.

Thus, the light distribution controlling device 8 according to the present embodiment controls the low beam lamp 44 so as to keep the region above the reference formation region of the low beam light distribution pattern PL from being illuminated with light (illuminated with the low beam light distribution pattern PL), in accordance with a change in the angle of tilt (bank angle) of the vehicle's right-left axis with respect to the horizontal line. Fig. 3(B) is an illustration for describing the light distribution control performed when the host vehicle 100 has become tilted sideways.

Specifically, the light distribution controlling device 8 can detect a change in the angle of tilt of the host vehicle 100 based on the measurement result of the attitude sensor 10. Furthermore, the light distribution controlling device 8 holds, in advance, a threshold of the angle of tilt of the vehicle's right-left axis. When the angle of tilt of the host vehicle 100 is smaller than a predetermined threshold, the light distribution controlling device 8 controls the low beam lamp 44 so as to form a low beam light distribution pattern PL in its reference formation region, as shown in Fig. 2. Furthermore, when a front vehicle 200 is present, the light distribution controlling device 8 controls the light distribution variable lamp 2 so as to form an ADB light distribution pattern PH that includes a shaded region 24.

When the angle of tilt of the host vehicle 100 becomes greater than or equal to the threshold, the light distribution controlling device 8 controls the low beam lamp 44 so as to displace the cutoff line CL downward, as shown in Fig. 3(B). In other words, the light distribution controlling device 8 moves the cutoff line CL of the low beam light distribution pattern PL formed when the angle of tilt has become greater than or equal to the threshold to below the position (the position indicated by a dashed line in Fig. 3(B)) where the cutoff line CL lies when the low beam light distribution pattern PL in its reference formation region becomes tilted by the angle equal to the angle of tilt.

For example, the light distribution controlling device 8 can displace the cutoff line CL downward in the vertical direction by displacing the optical axis O of the low beam lamp 44 lower in the up-down direction of the vehicle than the optical axis O held when the angle of tilt is smaller than the threshold. The threshold of the angle of tilt and the amount by which the cutoff line CL is to be displaced can be set as appropriate based on an experiment or simulation conducted by an engineer. Displacing a cutoff line CL downward means that, when a position in the right-left direction of the vehicle along the cutoff line CL held before the displacement is compared with the same position in the right-left direction held after the displacement, the position held after the displacement is lower in the vertical direction than the position held before the displacement, that is, the position held after the displacement is closer to the ground surface.

Lowering the cutoff line CL when the host vehicle 100 becomes tilted sideways in this manner makes it possible to keep at least a portion of the region above the reference formation region from being illuminated with the low beam light distribution pattern PL. Accordingly, the likelihood that the driver of the front vehicle 200 is illuminated with the low beam light distribution pattern PL can be reduced. Herein, the light distribution controlling device 8 may change the position where the low beam light distribution pattern PL is formed continuously or stepwise including three or more steps, in accordance with a change in the angle of tile of the vehicle's light-left axis. In other words, the light distribution controlling device 8 may displace the low beam light distribution pattern PL further downward as the angle of tilt of the host vehicle 100 becomes greater.

Furthermore, with regard to the light distribution variable lamp 2 as well, in one example, the light distribution controlling device 8 controls the driving mechanism 74 so as to lower the optical axis O. Then, the light distribution controlling device 8 controls the light distribution variable lamp 2 so as to form the ADB light distribution pattern PH that includes the shaded region 24 to overlap the front vehicle 200. This configuration makes it possible to keep the driver of the front vehicle 200 from being illuminated with the ADB light distribution pattern PH.

Furthermore, in one example, when a front vehicle 200 is present, the light distribution controlling device 8 controls the low beam lamp 44 so as to keep the region above the reference formation region from being illuminated with light. In other words, the light distribution controlling device 8 lowers the cutoff line CL only when the vehicle detecting device 6 has detected a front vehicle 200. When no front vehicle 200 is present, the light distribution controlling device 8 refrains from executing the control of keeping the region above the reference formation region from being illuminated with light and forms the low beam light distribution pattern PL without lowering the cutoff line CL. This configuration can reduce the load on the light distribution controlling device 8. Herein, the light distribution controlling device 8 may lower the cutoff line CL in accordance with the tilt of the host vehicle 100, regardless of the presence or absence of a front vehicle 200.

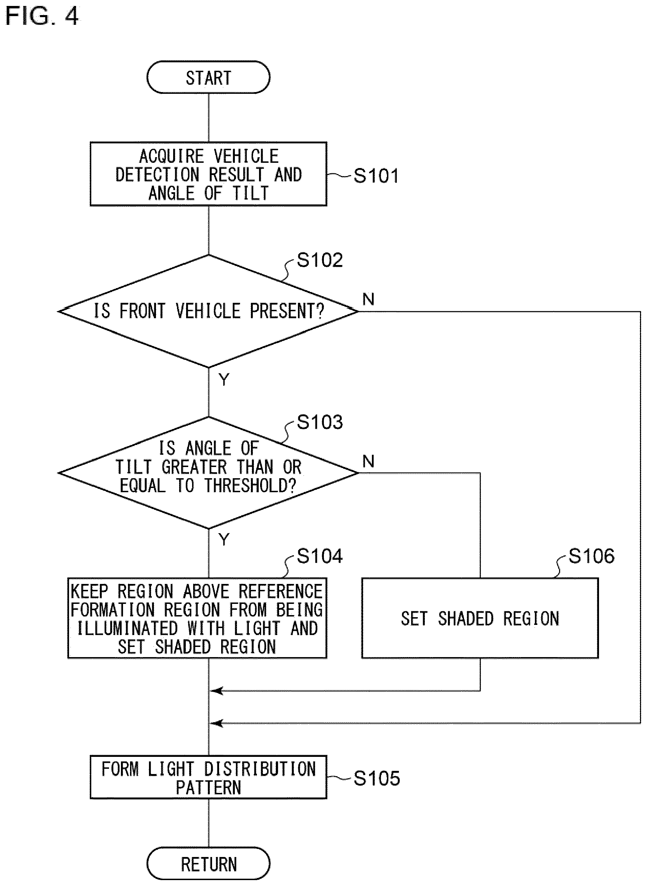

Fig. 4 is a flowchart for describing one example of control that the light distribution controlling device 8 executes. This flow is executed repeatedly at predetermined timings, for example, when the execution of the light distribution control is instructed via a light switch (not shown) and the ignition is on.

First, the light distribution controlling device 8 acquires the detection result of a front vehicle 200 from the vehicle detecting device 6. The light distribution controlling device 8 also acquires the angle of tilt of the host vehicle 100 from the attitude sensor 10 (S101). Then, the light distribution controlling device 8 determines whether a front vehicle 200 is present based on the detection result of the vehicle detecting device 6 (S102). If a front vehicle 200 is present (Y at S102), the light distribution controlling device 8 determines whether the angle of tilt of the vehicle's right-left axis of the host vehicle 100 is greater than or equal to a threshold (S103).

If the angle of tilt is greater than or equal to the threshold (Y at S103), the light distribution controlling device 8 controls the low beam lamp 44 so as to keep the region above the reference formation region from being illuminated with the low beam light distribution pattern PL. In the present embodiment, the light distribution controlling device 8 controls the driving mechanism 62 so as to lower the optical axis O of the low beam lamp 44. Furthermore, the light distribution controlling device 8 sets a shaded region 24 in the ADB light distribution pattern PH (S104). Then, the light distribution controlling device 8 controls the low beam lamp 44 so as to form the low beam light distribution pattern PL and controls the light distribution variable lamp 2 so as to form the ADB light distribution pattern PH (S105), and then the present routine is terminated. This flow makes it possible to form the low beam light distribution pattern PL with which the region above the reference formation region is kept from being illuminated. Furthermore, the ADB light distribution pattern PH that includes the shaded region 24 to overlap the front vehicle 200 can be formed.

If the angle of tilt is smaller than the threshold (N at S103), the light distribution controlling device 8 sets a shaded region 24 in the ADB light distribution pattern PH (S106) . The light distribution controlling device 8 refrains from adjusting the optical axis O of each lamp. Then, the light distribution controlling device 8 controls each of the lamps so as to form the light distribution patterns (S105), and the present routine is terminated. This flow makes it possible to form the low beam light distribution pattern PL in its reference formation region. Furthermore, the ADB light distribution pattern PH that includes the shaded region 24 to overlap the front vehicle 200 can be formed. If no front vehicle 200 is present (N at S102), the light distribution controlling device 8, without adjusting the optical axis of each lamp or setting a shaded region 24, controls each of the lamps to form the light distribution patterns (S105), and the present routine is terminated.

As described thus far, the light distribution controlling device 8 according to the present embodiment keeps the region above the reference formation region set in advance for the low beam light distribution pattern PL from being illuminated with light from the low beam lamp 44, in accordance with a change in the angle of tilt of the vehicle's right-left axis with respect to the horizontal line. Adjusting the illumination direction of the low beam light distribution pattern PL dynamically in accordance with the tilt of the host vehicle 100 in this manner makes it possible to reduce glare that the low beam light distribution pattern PL causes on the driver of the front vehicle 200.

In the present embodiment, a reference formation region is a region where a low beam light distribution pattern PL is formed when the angle of tilt of the vehicle's right-left axis with respect to a horizontal line is smaller than a predetermined threshold. Then, when the angle of tilt is greater than or equal to the threshold, the light distribution controlling device 8 displaces the cutoff line CL below the position where the cutoff line CL lies when the low beam light distribution pattern PL formed in its reference formation region becomes tilted by the angle equal to the angle of tilt. The displacement of the cutoff line CL can be achieved simply by changing the attitude of the low beam lamp 44 by the driving mechanism 62. Accordingly, the structure of the vehicle lamp system 1 can be kept from becoming complex.

Furthermore, the light distribution controlling device 8 according to the present embodiment displaces the cutoff line CL downward when a front vehicle 200 is present. This configuration can eliminate the adjustment of the attitude of the low beam lamp 44 when no front vehicle 200 is present, and thus the load on the light distribution controlling device 8 can be reduced.

The light distribution controlling device 8 controls the light distribution variable lamp 2, in addition to the low beam lamp 44. Then, when the host vehicle 100 has become tilted and the front vehicle 200 is present, the light distribution controlling device 8 keeps the region above the reference formation region from being illuminated with the light from the low beam lamp 44 and also controls the light distribution variable lamp 2 so as to form the ADB light distribution pattern PH that include the shaded region 24 to overlap the front vehicle 200. This configuration makes it possible to reduce glare caused on the driver of the front vehicle 200 and to improve the visibility of the driver of the host vehicle 100. Accordingly, safety in vehicle driving can be improved.

The host vehicle 100 provided with the light distribution controlling device 8 according to the present embodiment is a straddle-type vehicle. The vehicle's right-left axis of a straddle-type vehicle tends to become tilted further than that of a typical four-wheeled automobile. Therefore, the light distribution controlling device 8 can exhibit its functionality effectively especially in a straddle-type vehicle. Herein, the host vehicle 100 may be a vehicle other than a straddle-type vehicle, such as a four-wheeled automobile.

### (Embodiment 2)

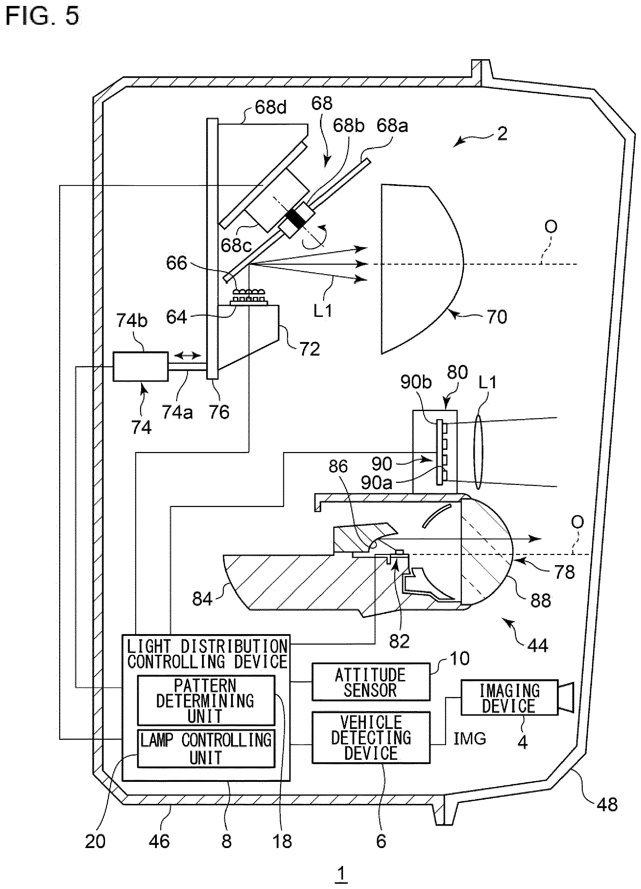

Embodiment 2 has a configuration common to that of Embodiment 1 except for the structure of the low beam lamp 44 and the content of light distribution control. The present embodiment will be described below with the description centered on its configuration that differs from the configuration of Embodiment 1, and description of the configuration that is common to both embodiments will be simplified or omitted as appropriate. Fig. 5 shows a schematic configuration of a vehicle lamp system 1 according to Embodiment 2. As with Fig. 1, Fig. 5 depicts some of the constituent elements of the vehicle lamp system 1 in the form of functional blocks.

The vehicle lamp system 1 includes a low beam lamp 44, a light distribution variable lamp 2, an imaging device 4, a vehicle detecting device 6, a light distribution controlling device 8, and an attitude sensor 10. The arrangement of these components is similar to that of Embodiment 1.

The low beam lamp 44 according to the present embodiment includes a first illuminating unit 78 and a second illuminating unit 80. The first illuminating unit 78 is a lamp unit of a so-called projector type (diffusion lens optical system) and includes a light source 82, a heat sink 84, a reflector 86, and a projection lens 88. The light source 82 is, for example, a semiconductor light emitting element, such as an LED, an LD, or an organic or inorganic EL element. Herein, the light source 82 may be constituted, for example, by an incandescent lamp, a halogen lamp, or a discharge lamp. The light source 82 is mounted on the heat sink 84 and emits light toward the reflector 86. The reflector 86 has a reflective surface formed, for example, by a part of a spheroidal surface. The reflector 86 is fixed to the heat sink 84 so that its positional relationship with the light source 82 is set in such a manner that the light source 82 is located on or around the focal point of the reflective surface.

The projection lens 88 is fixed to the end of the heat sink 84 that faces toward the front of the vehicle. The projection lens 88 is disposed in the optical axis O of the first illuminating unit 78. The projection lens 88 illuminates the region ahead of the vehicle while diffusing the light from the light source 82 in the right-left direction of the vehicle. In one example, the projection lens 88 is a cylindrical lens having a focal line extending in the horizontal direction and having a convex front surface and a planar rear surface. Light emitted from the light source 82 is reflected toward the projection lens 88 by the reflective surface of the reflector 86. The light reflected by the reflective surface enters the projection lens 88 and is applied to the region ahead while being diffused in the right-left direction by the projection lens 88.

The second illuminating unit 80 is capable of illuminating the region ahead of the host vehicle with a visible light beam L1 of a variable intensity distribution. The second illuminating unit 80 according to the present embodiment includes a light source array 90. The light source array 90 includes a plurality of light sources 90a arrayed in a matrix and a circuit board 90b that turns on or off the light sources 90a independently of each other. Preferred examples of the light source 90a include a semiconductor light emitting element, such as an LED, an LD, or an organic or inorganic EL element.

Herein, the structures of the first illuminating unit 78 and of the second illuminating unit 80 are not limited to those described above. For example, the first illuminating unit 78 may include a reflector having a reflective surface formed by a parabolic cylindrical surface, as an optical member that diffuses the light from the light source 82 in the right-left direction of the vehicle. Meanwhile, the second illuminating unit 80 may be a pattern forming device of a matrix type, such as a DMD or a liquid crystal device, or may be a pattern forming device of a scan optic type that scans the region ahead of the host vehicle with light source light.

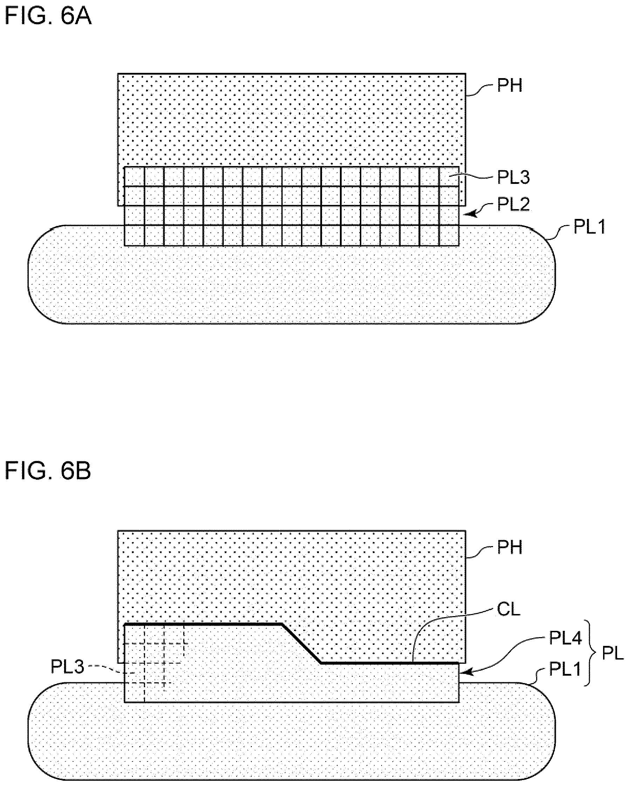

The configuration, functions, and operations of the light distribution variable lamp 2, the imaging device 4, the vehicle detecting device 6, and the attitude sensor 10 are similar to those according to Embodiment 1. The configuration of the light distribution controlling device 8 is similar to the configuration according to Embodiment 1, and in one example, the light distribution controlling device 8 includes a pattern determining unit 18 and a lamp controlling unit 20. Meanwhile, the control that the light distribution controlling device 8 executes differs from the control according to Embodiment 1. The shape of the light distribution patterns that the lamps according to the present embodiment form and the control of forming the light distribution patterns performed by the light distribution controlling device 8 will be described below. Fig. 6(A) shows a range that the low beam lamp 44 and the light distribution variable lamp 2 can illuminate with light. Fig. 6(B) is a schematic diagram of light distribution patterns that the low beam lamp 44 and the light distribution variable lamp 2 form.

The first illuminating unit 78 can form a diffusion pattern PL1, as shown in Figs. 6(A) and 6(B), by illuminating the region ahead with light from the light source 82. The second illuminating unit 80 can form a light distribution variable pattern PL2 above the diffusion pattern PL1, as shown in Fig. 6(A), by illuminating the region ahead with the light from the plurality of light sources 90a. At least a part of the light distribution variable pattern PL2 is formed in the region above the diffusion pattern PL1. The light distribution variable pattern PL2 has a structure formed by a collection of a plurality of partial regions PL3 arrayed in a matrix. In one example, the partial regions PL3 and the light sources 90a are mapped to each other in one-to-one correspondence. The illuminance of each partial region PL3 can be adjusted independently of each other by controlling the lit state of each light source 90a.

The second illuminating unit 80 can form a cutoff line pattern PL4, as shown in Fig. 6(B), by adjusting the illuminance of each partial region PL3. The cutoff line pattern PL4 includes a cutoff line CL and a plurality of partial regions PL3. The cutoff line CL is located above the diffusion pattern PL1. The plurality of partial regions PL3 are arrayed along the cutoff line CL below the cutoff line CL.

The low beam lamp 44 forms a low beam light distribution pattern PL by combining the diffusion pattern PL1 and the cutoff line pattern PL4. Accordingly, the low beam light distribution pattern PL includes the diffusion pattern PL1 extending in the right-left direction of the vehicle, the cutoff line CL located above the diffusion pattern PL1, and the plurality of partial regions PL3 located below the cutoff line CL.

The light distribution variable lamp 2 can form an ADB light distribution pattern PH, as shown in Figs. 6(A) and 6(B), through a combination of turning on/off the light source 64, rotating the rotary reflector 68, and driving the driving mechanism 74. At least a part of the ADB light distribution pattern PH is formed in the region above the cutoff line CL.

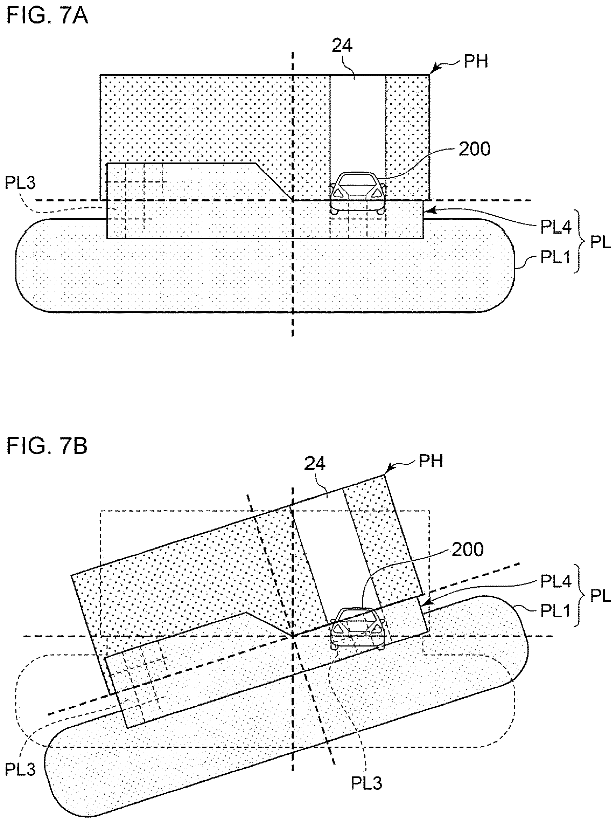

The light distribution controlling device 8 controls the low beam lamp 44 so as to keep the region above the reference formation region of the low beam light distribution pattern PL from being illuminated with light, in accordance with a change in the angle of tilt (bank angle) of the vehicle's right-left axis with respect to a horizontal line. Figs. 7(A) and 7(B) are illustrations for describing the light distribution control performed when the host vehicle 100 has become tilted sideways.

Specifically, the light distribution controlling device 8 can detect a change in the angle of tilt of the host vehicle 100 based on a measurement result of the attitude sensor 10. Furthermore, the light distribution controlling device 8 holds, in advance, a threshold of the angle of tilt of the vehicle's right-left axis. When the angle of tilt of the host vehicle 100 is smaller than a predetermined threshold, the light distribution controlling device 8 controls the low beam lamp 44 so as to form the low beam light distribution pattern PL in its reference formation region, as shown in Fig. 7(A). Furthermore, when a front vehicle 200 is detected by the vehicle detecting device 6, the light distribution controlling device 8 controls the light distribution variable lamp 2 so as to form the ADB light distribution pattern PH that includes a shaded region 24.

When the angle of tilt of the host vehicle 100 becomes greater than or equal to the threshold, the light distribution controlling device 8 controls the low beam lamp 44 so as to reduce the illuminance of at least one or more of the partial regions PL3 located above the reference formation region, as shown in Fig. 7(B). The light distribution controlling device 8 can identify the partial regions PL3 that are located above the reference formation region based on the information about the reference formation region held therein and the measurement result of the attitude sensor 10. For example, if even a part of a partial region PL3 is located above the reference formation region, that partial region PL3 is recognized to be located above the reference formation region. The illuminance of the partial regions PL3 is reduced, for example, to the illuminance of the shaded region 24.

Reducing the illuminance of the partial regions PL3 located above the reference formation region when the host vehicle 100 has become tilted sideways in this manner makes it possible to keep the region above the reference formation region from being illuminated with the low beam light distribution pattern PL. This configuration makes it possible to reduce glare that the low beam light distribution pattern PL causes on the driver of the front vehicle 200.

In one example, when a front vehicle 200 is present, the light distribution controlling device 8 controls the low beam lamp 44 so as to reduce the illuminance of the partial regions PL3 located above the reference formation region. When no front vehicle 200 is present, the light distribution controlling device 8 retains the illuminance of the partial regions PL3 located above the reference formation region. This configuration can reduce the load on the light distribution controlling device 8. Furthermore, the visibility of the driver of the host vehicle 100 can be kept from decreasing. The light distribution controlling device 8 controls the low beam lamp 44 so as to reduce the illuminance of, among the partial regions PL3 located above the reference formation region, those partial regions PL3 that overlap the front vehicle 200. Thus, the visibility of the driver of the host vehicle 100 can be further kept from decreasing.

Herein, when a front vehicle 200 is present, the pattern determining unit 18 may reduce the illuminance of the partial regions PL3 that are located above the reference formation region and that do not overlap the front vehicle 200. Furthermore, regardless of the presence or absence of a front vehicle 200, the pattern determining unit 18 may reduce the illuminance of all the partial regions PL3 located above the reference formation region.

Thus far, some embodiments of the present invention have been described in detail. The embodiments described above merely illustrate some specific examples for implementing the present invention. The content of the embodiments does not limit the technical scope of the present invention, and a number of design changes, including modifications, additions, and deletions of constituent elements, can be made within the scope that does not depart from the sprit of the invention set forth in the claims. A new embodiment resulting from adding a design change has advantageous effects of the embodiment combined and of the modification. With regard to the embodiments described above, expressions such as "according to the present embodiment" and "in the present embodiment" are added for emphasis to the content that can be subjected to a design change described above, but a design change is also permitted on the content without any of these expressions. Any combination of the constituent elements described above is also valid as an aspect of the present invention. Hatching added along a section in the drawings does not limit the material of such with hatching.

The invention according to the embodiments described above may be identified by the items indicated below.

### [First Item]

A light distribution controlling device (8) that controls a low beam lamp (44) capable of forming a low beam light distribution pattern (PL) having a cutoff line (CL), the light distribution controlling device (8) configured to:
control the low beam lamp (44) so as to keep a region above a reference formation region set in advance for the low beam light distribution pattern (PL) from being illuminated with light, in accordance with a change in an angle of tilt of a vehicle's right-left axis of a vehicle (100) provided with the low beam lamp (44).

### [Second Item]

The light distribution controlling device (8) according to First Item, wherein
the reference formation region is a region where the low beam light distribution pattern (PL) is formed when the angle of tilt is smaller than a predetermined threshold, and
when the angle of tilt is no smaller than the threshold, the light distribution controlling device (8) controls the low beam lamp (44) so as to position the cutoff line (CL) lower than a position where the cutoff line (CL) lies when the low beam light distribution pattern (PL) formed in the reference formation region becomes tilted by an angle equal to the angle of tilt.

### [Third Item]

The light distribution controlling device (8) according to First Item or Second Item, wherein
the low beam lamp (44) is capable of adjusting an illuminance of a plurality of partial regions (PL3) independently of each other, the plurality of partial regions (PL3) arrayed below the cutoff line (CL) in the low beam light distribution pattern (PL),
the reference formation region is a region where the low beam light distribution pattern (PL) is formed when the angle of tilt is smaller than a predetermined threshold, and
when the angle of tilt is no smaller than the threshold, the light distribution controlling device (8) controls the low beam lamp (44) so as to reduce the illuminance of at least one or more of the partial regions (PL3) that are located above the reference formation region.

### [Fourth Item]

The light distribution controlling device (8) according to any one of First Item to Third Item, wherein
when a front vehicle (200) is present, the light distribution controlling device (8) controls the low beam lamp (44) so as to keep the region above from being illuminated with light.

### [Fifth Item]

The light distribution controlling device (8) according to any one of First Item to Fourth Item, wherein
the light distribution controlling device (8) controls a light distribution variable lamp (2) capable of illuminating a region above the cutoff line (CL) with a visible light beam (L1) of a variable intensity distribution, and
when a front vehicle (200) is present, the light distribution controlling device (8) controls the low beam lamp (44) so as to keep the region above from being illuminated with light and also controls the light distribution variable lamp (2) so as to form a light distribution pattern (PH) that includes a shaded region (24) to overlap the front vehicle (200).

### [Sixth Item]

The light distribution controlling device (8) according to any one of First Item to Fifth Item, wherein
the vehicle (100) is a straddle-type vehicle.

### [Seventh Item]

A light distribution controlling method of controlling a low beam lamp (44) capable of forming a low beam light distribution pattern (PL) having a cutoff line (CL), the light distribution controlling method comprising:
controlling the low beam lamp (44) so as to keep a region above a reference formation region set in advance for the low beam light distribution pattern (PL) from being illuminated with light, in accordance with a change in an angle of tilt of a vehicle's right-left axis of a vehicle (100) provided with the low beam lamp (44).

### INDUSTRIAL APPLICABILITY

The present invention can be used in light distribution controlling devices and light distribution controlling methods.

### REFERENCE SIGNS LIST

1 vehicle lamp system, 2 light distribution variable lamp, 8 light distribution controlling device, 10 attitude sensor, 24 shaded region, 44 low beam lamp, 200 front vehicle, CL cutoff line, PH ADB light distribution pattern, PL low beam light distribution pattern.

## Claims

1. A light distribution controlling device that controls a low beam lamp capable of forming a low beam light distribution pattern having a cutoff line, the light distribution controlling device configured to:
control the low beam lamp so as to keep a region above a reference formation region set in advance for the low beam light distribution pattern from being illuminated with light, in accordance with a change in an angle of tilt of a vehicle's right-left axis of a vehicle provided with the low beam lamp.

2. The light distribution controlling device according to Claim 1, wherein
the reference formation region is a region where the low beam light distribution pattern is formed when the angle of tilt is smaller than a predetermined threshold, and
when the angle of tilt is no smaller than the threshold, the light distribution controlling device controls the low beam lamp so as to position the cutoff line lower than a position where the cutoff line lies when the low beam light distribution pattern formed in the reference formation region becomes tilted by an angle equal to the angle of tilt.

3. The light distribution controlling device according to Claim 1 or 2, wherein
the low beam lamp is capable of adjusting an illuminance of a plurality of partial regions independently of each other, the plurality of partial regions arrayed below the cutoff line in the low beam light distribution pattern,
the reference formation region is a region where the low beam light distribution pattern is formed when the angle of tilt is smaller than a predetermined threshold, and
when the angle of tilt is no smaller than the threshold, the light distribution controlling device controls the low beam lamp so as to reduce the illuminance of at least one or more of the partial regions that are located above the reference formation region.

4. The light distribution controlling device according to any one of Claims 1 to 3, wherein
when a front vehicle is present, the light distribution controlling device controls the low beam lamp so as to keep the region above from being illuminated with light.

5. The light distribution controlling device according to any one of Claims 1 to 4, wherein
the light distribution controlling device controls a light distribution variable lamp capable of illuminating a region above the cutoff line with a visible light beam of a variable intensity distribution, and
when a front vehicle is present, the light distribution controlling device controls the low beam lamp so as to keep the region above from being illuminated with light and also controls the light distribution variable lamp so as to form a light distribution pattern that includes a shaded region to overlap the front vehicle.

6. The light distribution controlling device according to any one of Claims 1 to 5, wherein
the vehicle is a straddle-type vehicle.

7. A light distribution controlling method of controlling a low beam lamp capable of forming a low beam light distribution pattern having a cutoff line, the light distribution controlling method comprising:
controlling the low beam lamp so as to keep a region above a reference formation region set in advance for the low beam light distribution pattern from being illuminated with light, in accordance with a change in an angle of tilt of a vehicle's right-left axis of a vehicle provided with the low beam lamp.
